# EUROPÄISCHE PATENTSCHRIFT

(11) **EP 2 856 615 B1**
(45) Veröffentlichungstag und Bekanntmachung des Hinweises auf die Patenterteilung: **01.02.2017**
(21) Anmeldenummer: 13736476.6
(22) Anmeldetag: 24.05.2013
(51) Int. Cl.: H02K 3/38, H02K 3/52

(54) **STATORSYSTEM FÜR EINEN ELEKTROMOTOR**
STATOR SYSTEM FOR AN ELECTRIC MOTOR
SYSTÈME DE STATOR POUR MOTEUR ÉLECTRIQUE

(30) Priorität: 24.05.2012 DE 102012010234
(43) Veröffentlichungstag der Anmeldung: 08.04.2015
(73) Patentinhaber: Brose Fahrzeugteile GmbH & Co. Kommanditgesellschaft, Würzburg, 97076 Würzburg (DE)
(72) Erfinder: PORTNER, Stefan, 97082 Würzburg (DE); STEEGMÜLLER, Horst, 97076 Würzburg (DE); WUST, Stefan, 97816 Lohr am Main (DE)
(74) Vertreter: FDST Patentanwälte
(86) Internationale Anmeldenummer: PCT/EP2013/001541
(87) Internationale Veröffentlichungsnummer: WO 2013/174523

(56) Entgegenhaltungen:
- JP-A- 2006 296 104
- JP-A- 2007 074 838
- JP-A- 2008 312 290
- JP-A- 2010 141 965
- JP-A- 2010 142 075

## Beschreibung

Die Erfindung betrifft ein Statorsystem für einen Elektromotor mit mehreren Spulenkörpern und darauf gewickelten Statorwicklungen, die über den Umfang des Statorsystems verteilt sind.

Bei einem mit Drehstrom betriebenen Elektromotor weist das (feststehende) Statorsystem eine Anzahl von kaskadierten Spulenpaaren als Magnetpole auf, welche bei einer Bestromung ein magnetisches Erregerfeld erzeugen. Im Inneren des Statorsystems ist Rotor drehbar angeordnet, der bei einem bürstenlosen Elektromotors mit Dauermagneten und bei einem sogenannten Kommutatormotor selbst mit einer Spulen- oder Feldwicklung versehen ist. Fließt durch die von den statorseitigen Spulen gebildeten Phasenwicklungen ein elektrischer Strom, so baut sich ein mit dem Magnetfeld des Rotors wechselwirkendes Erregerfeld auf, in Folge dessen sich der Rotor um dessen Rotorachse dreht.

Typischerweise sind in einem derartigen Statorsystem mit sternförmig angeordneten Statorzähnen und dazwischen vorgesehenen Statornuten eine Anzahl von Spulenpaaren unter Berücksichtigung der gewünschten (elektrischen) Phasenwicklung in Einzelzahntechnik auf den Statorzähnen aufgebracht. Hierbei führen im Betrieb unterschiedliche Spulenpaare verschiedene Stromphasen, wobei die Statorwicklungen bzw. Spulen eines Spulenpaares koppelnde Leiterbahnen herkömmlicherweise zumindest teilweise über benachbarte Spulenpaare verlegt und dort nebeneinander verlaufend angeordnet sind.

Derartige Statorsysteme werden beispielsweise in Elektromotoren für Servoantriebe von Kraftfahrzeug-Lenksystemen eingesetzt. Insbesondere bei Verwendung der Einziehwickeltechnologie tritt hierbei unter Umständen das Problem auf, dass sich Spulen oder die Leiterbahnen von Spulenpaaren unterschiedlicher Phasen elektrisch leitend berühren können. Die entstehenden Phasenschlüssen bedingen ein Fehlverhalten des Elektromotors und ein unerwünschtes, sicherheitskritisches, erhöhtes Bremsmoment, insbesondere bei Lenkungsanwendungen.

Üblicherweise werden zur Vermeidung dieses Phasenschluss-Problems die Leiterbahnen unterschiedlicher Spulenkörper mittels eines elektrisch nicht leitenden Isolierschlauches aus Kunststoff überzogen. Dadurch Ist ein zusätzlicher Produktionsschritt in der Herstellung des Statorsystems gegeben, der die Herstellungskosten und Herstellungsdauer des Statorsystems negativ beeinflusst.

Aus JP 2010 142075 A ist ein Stator bekannt, bei dem jede Spule zwei Anschlusstermlnals aufweist. Jeweils zwei Anschlussterminals sind mittels einer Verbindung elektrisch miteinander verbunden.

In JP 2006 296104 A ist ein Stator offenbart, der drei Phasen aufweist. Jeder Phase ist ein Ring zugeordnet ist, der jeweils mittels Halteelementen gehalten ist.

Die JP 2010 141965 A offenbart einen Stator, wobei an einer Spule teilweise ein isolierstück angebracht ist.

Aus JP 2008 312290 A ist eine elektrische Maschine mit sechs Spulen bekannt, deren Spulenenden in radialer Richtung geführt sind.

In JP 2007 074838 A ist ein Anschlussterminal für Spulenenden einer Statorwicklung offenbart. Ein Halteelement hält das Spulenende senkrecht zur Endseite des Stators.

Der Erfindung liegt daher die Aufgabe zugrunde, ein Statorsystem der eingangs genannten Art anzugeben, das einfach und kostengünstig eine betriebssichere Phasentrennung bei kaskadierten Spulenpaaren in einem Statorstem sicherstellt.

Diese Aufgabe wird erfindungsgemäß gelöst durch die Merkmale des Anspruchs 1. Vorteilhafte Ausgestaltungen und Welterbildungen sind Gegenstand der Unteransprüche.

Das Statorsystem ist Bestandteil eines Elektromotors, wobei der Elektromotor als bürstenbehaftet (Kommutatormotor) oder bürstenlos sein kann. Das Statorsystem umfasst eine Anzahl von Spulenkörpern, die jeweils mit einer Statorwicklung bewickelt sind. Die Statorwicklung ist beispielweise eine aus einem lackierten Kupferdraht hergestellte Spule. Die Spulenkörper und die sich darauf befindlichen Statorwicklungen sind zu einem kreisförmigen Statorstern angeordnet, wobei die zentralen Öffnungen der Spulen radial verlaufen. Die Axialrichtung des Elektromotors, also die Rotationsachse des Rotors, fällt mit der Achse des Statorsterns zusammen, der somit eine hohlzylindrische Form aufweist.

Aneinander angrenzende Statorwlcklungen sind gegeneinander elektrisch isoliert, beispielsweise indem zwischen diesen ein Raum bereitgestellt wird, innerhalb dessen ein elektrischer Isolator angeordnet ist. Der Isolator ist insbesondere ein Kunststoff, kann jedoch auch Luft sein. Ferner ist eine Anzahl von Statorwicklungen in Axialrichtung mittels eines Phasentrenners elektrisch isoliert. Zweckmäßigerweise sind die Statorwicklungen jeweils mittels eines der jeweiligen Statorwicklung zugeordneten Phasentrenners elektrisch isoliert. Die Phasentrenner sind demnach separate Bauteile. Es ist jedoch ebenso möglich einen einzigen Phasentrenner heranzuziehen, wobei dieser zweckmäßigerweise ring- oder ringsegmentförmig ausgeführt ist. Vorzugsweise ist der Phasentrenner aus einem Kunststoff gefertigt und insbesondere auf die jeweiligen Statorwicklungen aufgelegt. Über den Phasentrenner ist eine Leiterbahn geführt. Diese axial oberhalb des Phasentrenners verlaufende Leiterbahn ist Teil des die Spule oder Spulenwicklung bildenden Wicklungsdrahtes bzw. Teil einer entsprechenden Wicklungsleitung. Mit anderen Worten Der Phasentrenner befindet sich somit zwischen der Leiterbahn und der Statorwicklung.

Mittels der Leiterbahn werden zwei Statorwicklungen des Statorsystem elektrisch miteinander zu einem Spulenpaar verbunden, wobei die Statorwicklungen nicht direkt benachbart zueinander sind. Beispielsweise befinden sich die beiden Statorwicklungen des Spulenpaars auf Statorzähnen, die um im Wesentlichen 90° gegeneinander versetzt sind. Hierbei weist die Leiterbahn vorzugsweise einen im Wesentlichen tangentialen Verlauf auf. Mit anderen Worten ist die Leiterbahn über sämtliche, sich zwischen den beiden Statorwicklungen eines Spulenpaares befindenden Statorwicklungen geführt, von denen jede insbesondere mittels eines der Phasentrenner zu der Leiterbahn hin elektrisch isoliert ist.

Die Leiterbahn wird mittels eines Trennsteges gehalten, wobei die Leiterbahnen zwischen dem Trennsteg und dem Phasentrenner angeordnet ist. Beispielsweise ist der Verlauf des Trennstegs im Wesentlichen radial und im Wesentlichen rechtwinklig zu der Leiterbahn. Der Trennsteg ist beispielsweise an einem der Spulenkörper angebunden oder an dem Phasentrenner befestigt, oberhalb dessen er sich befindet. Beispielsweise ist der Trennsteg dort festgeklebt oder mit der jeweiligen Komponente verschweißt, zum Beispiel mittels Ultraschallschweißens.

Aufgrund der Verwendung des Trennstegs wird die Position der Leiterbahn stabilisiert und eine Bewegung derselben gegen eine weitere elektrisch leitende Komponente, insbesondere einer benachbarten Leiterbahn, während des Betriebs des Elektromotors verhindert. Durch die Verwendung des Trennsteges kann weiterhin das Spulenpaar ohne zusätzlichen Produktionsschritt gewickelt und im Statorstern verbaut werden. Dadurch verringern sich vorteilhaft die Herstellungskosten des Statorsyatems.

Der Trennsteg weist eine zum Phasentrenner hin offene Aussparung zur Aufnahme der Leiterbahn auf. Dadurch Ist eine betriebssichere Phasenisolation mittels des Phasentrenners und des Trennstegs realisiert. Hierbei ist die Herstellung des Trennstegs vergleichsweise kostengünstig, da keine weiteren Komponenten, wie z. B. Schrauben oder dergleichen, zum Halten der jeweiligen Leiterbahn bereitgestellt werden müssen.

In einer geeigneten Ausführungsform sind hierbei die Leiterbahnen im Wesentlichen zwischen dem, bevorzugterweise aus einem elektrisch nicht leitenden Kunststoff gefertigten, Trennsteg und den Phasentrennem zerstörungsfrei klemmbefestigt, und dadurch galvanisch zu benachbarten Leiterbahnen und den Statorwicklungen getrennt.

In einer bevorzugten Weiterbildung Ist der Trennsteg mit dem zugeordneten Spulenkörper verrastet. Hierdurch ist eine besonders einfache, kostengünstige und betriebssichere Phasenisolation hergestellt. Aufgrund der Verrastung werden die Leiterbahnen in einfacher Art und Weise gegeneinander elektrisch isoliert beziehungsweise räumlich galvanisch getrennt. Phasenschlüssen aufgrund von möglichen Beschädigungen der Leiterbahnen sind somit sicher vermieden.

In einer geeigneten Ausführung erstreckt sich der Phasentrenner im Wesentlichen über die gesamte axiale Länge und die radiale Breite des Spulenkörpers. In einer geeigneten Ausführungsform sind die Phasentrenner somit im Vergleich zu herkömmlichen Ausführungen verlängert beziehungsweise verbreitert, sodass mehrere Leiterbahnen auf den Phasentrennem problemlos nebeneinander, beispielsweise im Wesentlichen tangential zum Statorstern verlaufend, angeordnet werden können. Dabei ist zuverlässig verhindert, dass die Leiterbahnen einander oder die Statorwicklungen des jeweiligen Spulenkörpers berühren.

In einer vorteilhaften Ausgestaltung erstreckt sich der geeigneterweise etwa quaderförmig ausgeführte Trennsteg im Montagezustand im Wesentlichen über die gesamte radiale Breite des jeweiligen Spulenkörpers des Statorstems. Dadurch ist ein betriebssicheres Verrasten des Trennsteges auf dem Phasentrenner, beispielsweise an Haltekonturen der entsprechen axial verlängerten Spulenkörper, ermöglicht.

Die an die Querschnittsform der geeigneterweise in Form eines entsprechenden Abschnitts des Wicklungsdraht des Spulenpaares ausgeführten Leiterbahn angepasste Aussparung ist im Querschnitt ein Kreissegment größer als 180°. Auf diese Weise ist es ermöglicht, dass die Leiterbahn kraftschlüssig innerhalb der jeweiligen Aussparung einliegt. Mit anderen Worten wird bei der Montage des Statorsystems jede Leiterbahn in die jeweilige hierzu korrespondierende Ausnehmung eingeschnappt. Aufgrund der derartigen Befestigung kann auf eine Zuhilfenahme von Klebstoffen bei der Montage verzichtet werden. Ebenso ist es nicht erforderlich, die Leiterbahn und den jeweiligen Trennsteg für eine sichere Verbindung miteinander zu verschweißen.

Insbesondere ist die Aussparung in einer vorteilhaften Ausgestaltung des Trennstegs schräg, sodass sichergestellt ist, dass der im Wesentlichen radial zum Statorstern angeordnete Trennsteg die etwa tangential zum Statorstern auf den Phasentrennem angeordnete Leiterbahn aufnehmen kann. Die in den Trennsteg eingebrachte Aussparung weist in dieser Ausführungsform somit sowohl radiale als auch tangentiale Komponenten auf. Das ist besonderes von Vorteil, wenn sich die elektrische Verbindung zwischen der Leiterbahn und einem der Spulenkörper eines der Spulenpaare vergleichsweise nahe an der Innenseite des Statorsterns befindet, wohingegen die elektrische Verbindung zwischen der Leiterbahn und dem anderen Spulenkörper des Spulenpaars vergleichsweise nahe an der Außenseite des Statorsterns ist.

Zur Verringerung von Materialkosten ist es ermöglicht, mit der Leiterbahn eine vergleichsweise kurze Verbindung zwischen den beiden elektrischen Verbindungen zu realisieren, wobei die Leiterbahn innerhalb der Aussparung geführt ist. Insbesondere sind keine Biegungen oder Knickstellen in die jeweilige Leiterbahn eingebracht.

Weiterhin weist der Trennsteg in einer bevorzugten Ausführung eine Anzahl von radial zueinander beabstandeten (schrägen) Aussparungen auf, sodass im Wesentlichen jede Leiterbahn auf dem Phasentrenner im Montagezustand in einer separaten Aussparung des Trennstegs einliegt. Dadurch ist eine besonders betriebssichere Phasenisolation mittels des Phasentrenners und des Trennstegs sichergestellt.

In einer besonders vorteilhaften Ausgestaltung der Rastverbindung zwischen dem Trennsteg und dem jeweiligen Spulenkörper ist in den Spulenkörper, oberhalb derer die Leiterbahn angeordnet ist, eine Ausnehmung eingebracht. Die Ausnehmung weist in deren Randbereich vorzugsweise zwei Rasthaken auf, die im Montagezustand den Trennsteg verrasten. Mit anderen Worten liegt der Trennsteg zumindest teilweise formschlüssig innerhalb der Aussparung und wird mittels der Rasthaken kraftschlüssig dort gehalten. Beispielsweise befindet sich die Ausnehmung an der der Innenseite oder der Außenseite des Statorsterns zugewandten Seite des Spulenkörpers. Denkbar ist jedoch auch, dass sowohl an der Innenseite als auch an der Außenseite jeweils eine derartige Aussparung in den Spulenkörper eingebracht ist. Hierbei wird der Trennsteg auf den beiden Seiten mit dem Spulenkörper verrastet. Dadurch ist eine besonders einfache und kostengünstige Befestigung des Trennstegs am Spulenkörper ermöglicht.

In einer geeigneten Weiterbildung ist ein Sicherungselement an den Trennsteg angeformt, das an einer korrespondierenden Anschlagfläche des Spulenkörpers anliegt. Dadurch wird die Rastverbindung vorteilhaft und einfach in ihrem Formschluss verbessert, wodurch eine besonders sichere Phasentrennung auch bei Erschütterungen und Vibrationen während des Betriebs des Elektromotors sichergestellt ist.

Zweckmäßigerweise ist der Trennsteg nach Art eines Filmscheniers an den Spulenkörper angelenkt. Hierbei wird beispielsweise das Freiende des Trennstegs zur Montage mit dem Spulenkörper verrastet. In einer diesbezüglich vorteilhaften Ausführungsform ist der Spulenkörper im Spritzgussverfahren hergestellt und der Trennsteg an den Spulenkörper direkt angespritzt. Durch die einstückige Ausführung sowie der Herstellung beider Elemente in einem Prozessschritt werden die Herstellungskosten des Statorsystems vorteilhaft reduziert. Weiterhin reduzieren sich die Lagerhaltungskosten bei der Herstellung eines derartigen Statorsystems. Zur Montage wird das Freiende des Filmschanier-Trennstegs einfach mit der Ausnehmung der Rastverbindung verrastet.

Bezüglich eines Elektromotors, insbesondere eines Servoantriebs eines Kraftfahrzeug-Lenksystems, mit einem erfindungsgemäßen Statorsystems wird die obige Aufgabe gelöst durch die Merkmale des Anspruchs 11. Durch die Verwendung des erfindungsgemäßen Statorsystems ist eine einfache, kostengünstige und betriebssichere Phasentrennung sichergestellt. Dadurch werden Phasenschlüsse und insbesondere bei Lenkungsanwendungen unerwünschte, sicherheitskritische erhöhte Bremsmomente vorteilhaft vermieden.

Nachfolgend werden Ausführungsbeispiele der Erfindung anhand einer Zeichnung näher erläutert. Darin zeigen:
- Fig. 1: in Draufsicht den Statorstern eines sechspoligen Statorsystems, umfassend zwölf Spulenkörper mit Statorwicklungen, wobei jeweils zwei Spulenkörper mit einer Leiterbahn zu einem Spulenpaar als Magnetpol ausgeführt sind,
- Fig. 2: in perspektivischer Darstellung ein Spulenpaar,
- Fig. 3: perspektivisch ausschnittsweise die Spulenkörper des Statorsterns mit Phasentrennem und Trennstegen zur galvanischen Trennung der Leiterbahnen und Statorwicklungen,
- Fig. 4: in perspektivischer Darstellung ein Trennsteg mit schräg orientierten Aussparungen,
- Fig. 5: in ausschnittsweiser Darstellung die Rastverbindung des Trennstegs mit in den Spulenkörper eingebrachte und mit Rasthaken versehene radialen Ausnehmungen des Spulenkörpers, und
- Fig. 6: in ausschnittsweiser Darstellung die Rastverbindung des Trennstegs nach Art eines Filmschaniers.

Einander entsprechende Teile und Größen sind in allen Figuren mit den gleichen Bezugszeichen versehen.

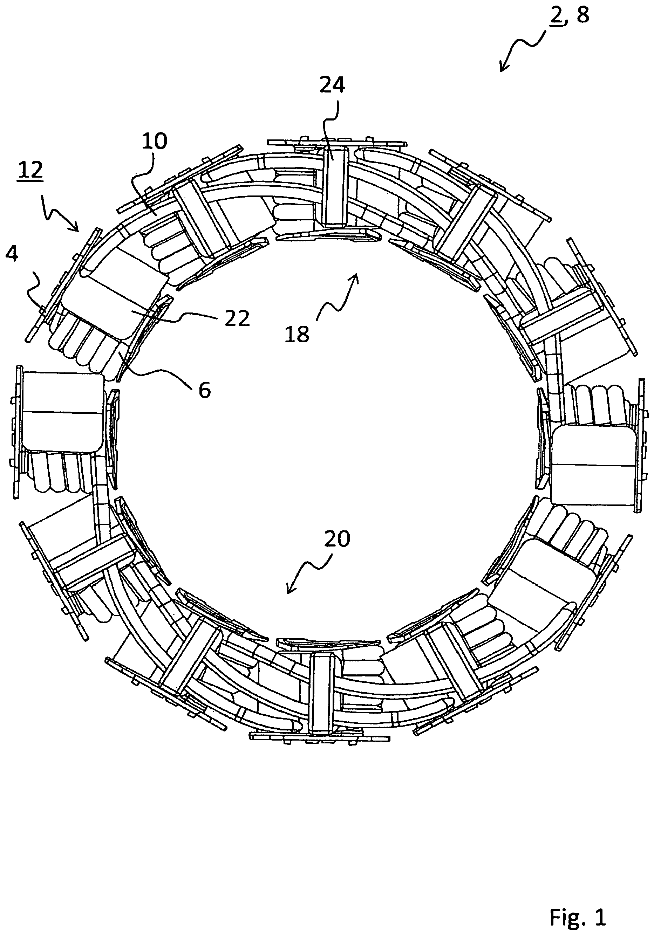

Fig. 1 zeigt ein Statorsystem 2 für einen nicht näher dargestellten Elektromotor, umfassend zwölf Spulenkörper 4 als Einzel-Statorzähne mit darauf gewickelten Statorwicklungen oder Spulen 6.

Die Spulenkörper 4 sind zu einem ringförmigen, kreisrunden Statorstern 8 angeordnet. Im Inneren des Statorsterns 8 ist im Montagezustand ein Rotor des Elektromotors angeordnet, der drehbar im magnetischen Erregerfeld des Statorsystems 2 gelagert ist. Jeweils zwei Spulenkörper 4 mit den jeweiligen Statorwicklungen 6 sind elektrisch leitend mittels einer Leiterbahn 10 elektrisch verbunden und als eine Baugruppe zu einem Spulenpaar 12 zusammengefasst. Die jeweilige Leiterbahn 10 ist Bestandteil der entsprechenden Spulen- bzw. Statorwicklung 6. In den Figuren ist beispielhaft jeweils nur eine derartige Spulenpaar-Baugruppe mit Bezugszeichen versehen.

Die sechs kaskadierenden Spulenpaare 12 werden im Betrieb des Elektromotors mit einem elektrischen Strom durchflossen und bilden sechs magnetischer Polbereiche des Statorsystems 2. Die Spulenpaare 12 des Statorsterns 2 sind untereinander elektrisch in Reihe oder parallel geschaltet. Die Leiterbahn 10 eines Spulenpaares 12 erstreckt sich im Wesentlichen jeweils über die Spulenkörper 4 zweier weiterer Spulenpaare 12.

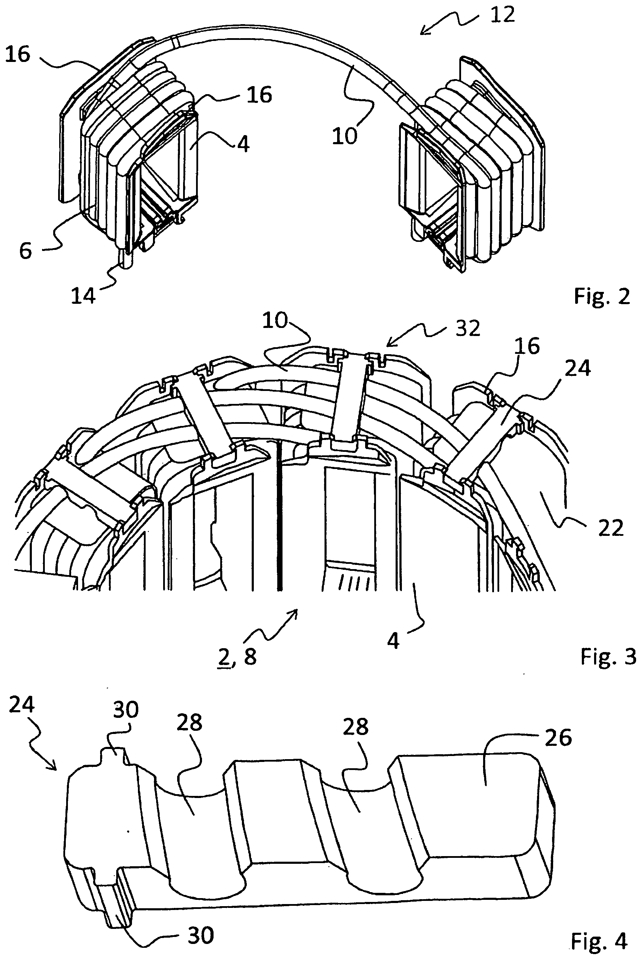

In Fig. 2 ist ein Spulenpaar 12 exemplarisch detaillierter dargestellt. Die Statorwicklungen 6 weisen jeweils zwei Anschlussenden auf, nämlich ein Kontaktierende 14 und ein Verbindungsende, welches als Leiterbahn 10 zwischen den Spulen verläuft. Die Statorwicklungen 6 der beiden Spulenkörper 4 sowie die Leiterbahn 10 sind einstückig aus einem Kupferdraht ausgeführt, der mittels einer Einzelzahnwickeltechnik um die Spulenkörper 4 gewickelt ist. In dieser Ausführung ist jeder Spulenkörper 4 eines Spulenpaares 12 mit sechs Statorwicklungen 6 umwickelt. Die Spulenkörper 4 sind im Wesentlichen rechteckförmige Spritzgussbauteile aus elektrisch nicht leitendem Kunststoff, welche in radialer Richtung - zum Innen- und Außenumfang des Statorsterns 2 hin - eine Haltewand 16 aufweisen. In axialer Richtung weist der Spulenkörper 4 somit einen im Wesentlichen H-förmigen Querschnitt auf, wobei die Statorwicklungen 6 um den horizontalen H-Schenkel gewickelt sind.

Die Kontaktierenden 14 sind in geeigneterweise mit den benachbarten Spulenpaaren 12 der gleichen Phase über eine Schweiß- oder Lötverbindung, durch Verpressung oder dergleichen kontaktiert. Das Statorsystem 2 umfasst im Wesentlichen - wie in Fig. 1 ersichtlich ist - eine obere Spulenpaarbaugruppe 18 und eine untere Spulenpaarbaugruppe 20, wobei die Kontaktierenden 14 der jeweils äußersten Spulenkörper 4 der jeweiligen Spulenbaugruppe 18, 20 zur Steuerung und Versorgung des Statorsystems 2 mit einer nicht näher dargestellten Steuereinrichtung und Stromquelle des Elektromotors gekoppelt ist. Die Spulenpaarbaugruppen 18, 20 umfassen jeweils drei Spulenpaare 12, die untereinander derart kaskadiert elektrisch in Reihe geschalten sind, dass jede Leiterbahn 10 im Betrieb der Spulenpaarbaugruppe 18, 20 eine unterschiedliche Stromphase führt.

Zur galvanischen Trennung der Stromphasen zwischen einer Leiterbahn 10 und den Statorwicklungen 6 der Spulenpaare 12 sind den Spulenkörpern 4 im Bereich der Leiterbahnen 10 jeweils ein Phasentrenner 22 zugeordnet. Die Phasentrenner 22 isolieren in Axialrichtung die Statorwicklungen 6 und erstrecken sich - wie in Fig. 3 ersichtlich - im Wesentlichen über die gesamte axiale Länge und die radiale Breite des Spulenkörpers 4. Die Leiterbahnen 10 der Spulenpaare 12 sind auf den Phasentrennern 22 im Wesentlichen tangential zum Statorstern 8 verlegt, wobei mehrere Leiterbahnen 10 nebeneinander auf einem Phasentrenner 22 vorzugsweise triplespiralarmartig angeordnet sind.

Die Leiterbahnen 10 der vier inneren Spulenkörper 4 der Spulenbaugruppen 18, 20 sind zusätzlich mit einem radial zum Statorstern 8 orientierten Trennsteg 24 festgeklemmt. Der Trennsteg 24 ist aus einem elektrisch nicht leitenden Kunststoff gefertigt und erstreckt sich im Wesentlichen über die gesamte radiale Breite des jeweiligen Spulenkörpers 4 des Statorsterns 8.

Fig. 4 zeigt den Aufbau eines derartigen Trennstegs 24, mit einem im Wesentlichen quaderartigen Trennstegkörper 26, zwei Aussparungen 28 zur Aufnahme der Leiterbahnen 10 und zwei angeformten Fixierstegen 30 als radiale Sicherungs- oder Anschlagelemente. Die Fixierstege 30 sind senkrecht zum Trennstegkörper 26 am im Montagezustand außenumfangseitigen Ende angeordnet, sodass der Trennsteg 24 im Wesentlichen T-förmig ist. Die Aussparungen 28 sind im Montagezustand zum Phasentrenner 22 orientiert und weisen in ihrem Querschnitt ein Kreissegment von größer 180° auf, sodass die Leiterbahnen 10 in die Aussparungen 28 einklipsbar sind und betriebssicher gehalten werden.

Die Aussparungen 28 sind radial zueinander beabstandet und haben einen zum Trennsteg 24 schrägen Verlauf, sodass die spiralarmartig angeordneten, tangential orientierten Leiterbahnen 10 problemlos in den Trennsteg 24 einklipsbar sind. Durch den Trennsteg 24 werden die vorzugsweise als litzenartige Kupferdrähte ausgeführten Leiterbahnen 10 galvanisch räumlich getrennt und sicher gehalten, sodass Phasenschlüssen zwischen benachbarten Leiterbahnen 10 in Folge einer möglichen Beschädigung deren Einzeldrähte zuverlässig vermieden sind

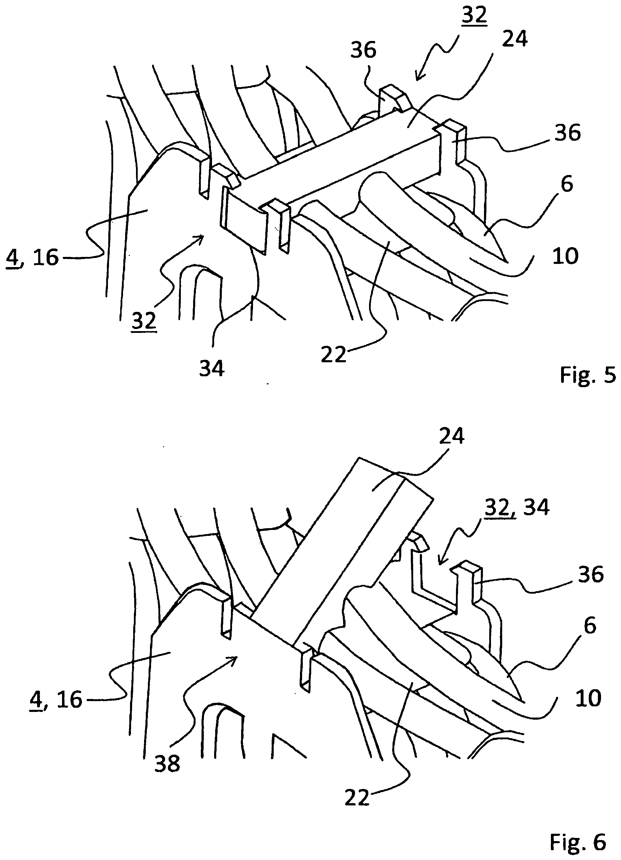

Die Trennstege 24 sind mittels einer Rastvorrichtung 32 der Haltewände 16 an den Spulenkörpern 4 zerstörungsfrei klemmfixierbar. In Fig. 5 ist die Rastvorrichtung 32 ausschnittsweise näher dargestellt. Hierzu weisen die Haltewände 16 am Innen- und Außenumfang des Statorsterns 8 trennstegseitig eine im Wesentlichen U-förmige Rastkontur 34 auf. An den oberen Enden der vertikalen U-Schenkel sind überhangsartig und einwärts einander zugewandt jeweils zwei Rasthaken 36 angeordnet, welche den Trennsteg 24 im eingeklipsten Montagezustand in axialer Richtung fixieren. Die Fixierstege 30 des Trennstegs 24 liegen radial im Montagezustand an den vertikalen U-Schenkeln der Rastkontur 34 zum Außenumfang des Statorsterns 8 hin an. Dadurch verbessert sich der Formschluss der Rastvorrichtung 32, wodurch eine besonders sichere Phasentrennung auch bei Erschütterungen und Vibrationen während des Betriebs des Elektromotors sichergestellt ist.

In Fig. 6 ist eine alternative Ausführung des Spulenkörpers 4 und des Trennstegs 24 nach Art eines Filmschaniers 38 dargestellt. In dieser Ausführung ist die Rastvorrichtung 32 am Außenumfang des Statorsterns 8 durch das Filmscharnier 38 ersetzt. Der Spulenkörper 4 und der Trennsteg 24 sind in dieser Ausführung als ein gemeinsames Spritzgussbauteil ausgeführt, wobei der Trennsteg 24 als Scharnierbügel freiendseitig in die Rastkontur 34 am Innenumfang einklipsbar ist.

### Bezugszeichenliste

- 2: Statorsystem
- 4: Spulenkörper
- 6: Statorwicklung
- 8: Statorstern
- 10: Leiterbahn
- 12: Spulenpaar
- 14: Kontaktierende
- 16: Haltewand
- 18,20: Spulenpaarbaugruppe
- 22: Phasentrenner
- 24: Trennsteg
- 26: Trennstegkörper
- 28: Aussparung
- 30: Fixiersteg
- 32: Rastvorrichtung
- 34: Rastkontur
- 36: Rasthaken
- 38: Filmscharnier

## Patentansprüche

1. Statorsystem (2) für einen Elektromotor mit mehreren Spulenkörpern (4) und darauf gewickelten Statorwicklungen (6),
- wobei die Statorwicklungen (6) über den Umfang des Statorsystems (2) verteilt und zu einem kreisrunden Statorstern (8) angeordnet sind, dessen Achse mit einer Axialrichtung des Elektromotors zusammen fällt,
- wobei eine Anzahl der Statorwicklungen (6) in Axialrichtung jeweils mittels eines Phasentrenners (22) elektrisch isoliert ist,
- wobei die Statorwicklungen (6) von mindestens jeweils zwei Spulenkörpern (4) als ein Spulenpaar (12) elektrisch leitend mittels einer Leiterbahn (10) elektrisch verbunden sind, und
- wobei jede Leiterbahn (10) mittels eines in der Axialrichtung oberhalb des zugeordneten Phasentrenner (22) angeordneten, vorzugsweise radial verlaufenden, Trennstegs (24) gehalten ist,
- wobei sich der jeweilige Phasentrenner (12) zwischen der jeweiligen Leiterbahn (10) und der jeweiligen Stator wichlung befindet, **dadurch gekennzeichnet, dass** der Trennsteg (24) eine zum Phasentrenner (22) hin offene Aussparung (28) zur Aufnahme der Leiterbahn (10) aufweist.

2. Statorsystem (2) nach Anspruch 1,
**dadurch gekennzeichnet,**
**dass** der Trennsteg (24) mit dem zugeordneten Spulenkörper (4) verrastet ist.

3. Statorsystem (2) nach Anspruch 1 oder 2,
**dadurch gekennzeichnet,**
**dass** sich der Phasentrenner (22) über die gesamte axiale Länge und die radiale Breite des Spulenkörpers (4) erstreckt.

4. Statorsystem (2) nach einem der Ansprüche 1 bis 3,
**dadurch gekennzeichnet,**
**dass** sich der Trennsteg (24) Im Montagezustand über die gesamte radiale Breite des jeweiligen Spulenkörpers (4) des Statorsterns (8) erstreckt.

5. Statorsystem (2) nach einem der Ansprüche 1 bis 4,
**dadurch gekennzeichnet,**
**dass** die Aussparung (28) im Querschnitt ein Kreissegment größer 180° ist.

6. Statorsystem (2) nach einem der Ansprüche 1 bis 5,
**dadurch gekennzeichnet**
die Aussparung (28) bezüglich der Radialrichtung des Statorsterns (8) einen schrägen Verlauf mit einer radialen Komponente, und mit einer tangentialen Komponente aufweist.

7. Statorsystem (2) nach einem der Ansprüche 1 bis 6,
**dadurch gekennzeichnet,**
**dass** der Trennsteg (24) eine Anzahl von bezüglich der Radialrichtung des Statorsterns (8) zueinander beabstandeten Aussparungen (28) aufweist.

8. Statorsystem (2) nach einem der Ansprüche 2 bis 7,
**dadurch gekennzeichnet,**
**dass** die Rastverbindung eine in den jeweiligen Spulenkörper (4) eingebrachte und mit Rasthaken (36) versehene Ausnehmung (34) aufweist, in welcher der Trennsteg (24) einliegt.

9. Statorsystem (2) nach einem der Ansprüche 1 bis 8,
**dadurch gekennzeichnet,**
**dass** an den Trennsteg (24) ein Sicherungselement (30) angeformt ist, das an einer korrespondierenden Anschlagfläche (34) des Spulenkörpers (4) in Radialrichtung des Statorsterns (8) anliegt.

10. Statorsystem (2) nach einem der Ansprüche 1 bis 9,
**dadurch gekennzeichnet,**
**dass** der Trennsteg (24) nach Art eines Filmscharniers (38) an den Spulenkörper (4) angelenkt ist.

11. Elektromotor, insbesondere eines Servoantriebs eines Kraftfahrzeug-Lenksystems, mit einem Statorsystem (2) nach einem der Ansprüche 1 bis 10.

## Claims

1. Stator system (2) for an electric motor, having several coil formers (4) and stator windings (6) wound thereon,
- wherein the stator windings (6) are distributed over the periphery of the stator system (2) and are arranged to form a circular stator star (8), the axis of which concurs with an axial direction of the electric motor,
- wherein a number of stator windings (6) are electrically isolated in the axial direction, in each case by means of a phase splitter (22),
- wherein the stator windings (6) of at least two respective coil formers (4) are connected in an electrically conductive manner as a coil pair (12) by means of a conductor path (10), and
- wherein each conductor path (10) is secured by means of a dividing web (24) that preferably runs radially and is arranged in the axial direction above the allocated phase splitter (22),
- wherein the respective phase splitter (12) is located between the respective conductor path (10) and the respective stator winding,
**characterised in that** the dividing web (24) has a cavity (28) opening out towards the phase splitter (22) to receive the conductor path (10).

2. Stator system (2) according to claim 1,
**characterised in that**
the dividing web (24) is interlocked with the allocated coil former (4).

3. Stator system according to claim 1 or 2,
**characterised in that**
the phase splitter (22) extends over the entire axial length and the radial width of the coil former (4).

4. Stator system (2) according to one of claims 1 to 3,
**characterised in that**
in the assembled state, the dividing web (24) extends over the entire radial width of the respective coil former (4) of the stator star (8).

5. Stator system (2) according to one of claims 1 to 4,
**characterised in that**
the cross-section of the cavity (28) is a circle segment of greater than 180°.

6. Stator system according to one of claims 1 to 5,
**characterised in that**
the cavity (28) has an angular course relative to the radial direction of the stator system (8), with a radial component and a tangential component.

7. Stator system (2) according to one of claims 1 to 6,
**characterised in that**
the dividing web (24) has a number of cavities (28) that are spaced apart from one another relative to the radial direction of the stator system (8).

8. Stator system (2) according to one of claims 2 to 7,
**characterised in that**
the snap connection has a recess (34) in which the dividing web (24) is enclosed, said recess being introduced into the respective coil former (4) and being provided with snap hooks (36).

9. Stator system (2) according to one of claims 1 to 8,
**characterised in that**
a securing element (30) is fitted onto the dividing web (24), said securing element adjoining a corresponding stop surface (34) of the coil former (4) in the radial direction of the stator star (8).

10. Stator system (2) according to one of claims 1 to 9,
**characterised in that**
the dividing web (24) is hinged onto the coil former (4) in the manner of an integral hinge (38).

11. Electric motor, in particular a servo drive of a motor vehicle steering system, having a stator system (2) according to one of claims 1 to 10.

## Revendications

1. Système de stator (2) pour un moteur électrique, comportant plusieurs corps de bobine (4) et des enroulements statoriques (6) enroulés sur lesdits corps,
- les enroulements statoriques (6) étant répartis sur la circonférence du système de stator (2) et disposés en formant une étoile statorique (8) ronde dont l'axe coïncide avec une direction axiale du moteur électrique,
- un certain nombre des enroulements statoriques (6) étant chacun isolés électriquement dans la direction axiale au moyen d'un séparateur de phases (22),
- les enroulements statoriques (6) d'au moins deux corps de bobine (4) à chaque fois étant connectés électriquement au moyen d'une piste conductrice (10) en formant une paire de bobines (12), et
- chaque piste conductrice (10) étant maintenue au moyen d'une barrette de séparation (24) disposée en direction axiale au-dessus du séparateur de phases (22) correspondant, en s'étendant de préférence radialement,
- chacun des séparateurs de phase (12) se trouvant entre la piste conductrice (10) correspondante et l'enroulement statorique correspondant,
**caractérisé en ce que** la barrette de séparation (24) est munie d'un logement (28) ouvert en direction du séparateur de phase (22) et destiné à recevoir la piste conductrice (10).

2. Système de stator (2) selon la revendication 1, **caractérisé en ce que** la barrette de séparation (24) est encliquetée avec le corps de bobine qui lui est attribué (4).

3. Système de stator (2) selon la revendication 1 ou 2, **caractérisé en ce que** le séparateur de phases (22) s'étend sur toute la longueur axiale et la largeur radiale du corps de bobine (4).

4. Système de stator (2) selon l'une des revendications 1 à 3, **caractérisé en ce que** la barrette de séparation (24), à l'état monté, s'étend sur toute la largeur radiale du corps de bobine (4) correspondant de l'étoile statorique (8).

5. Système de stator (2) selon l'une des revendications 1 à 4, **caractérisé en ce que** l'évidement (28) est en coupe transversale un segment de cercle supérieur à 180°.

6. Système de stator (2) selon l'une des revendications 1 à 5, **caractérisé en ce que** l'évidement (28) présente un tracé incliné par rapport à la direction radiale de l'étoile statorique (8) avec une composante radiale et avec une composante tangentielle.

7. Système de stator (2) selon l'une des revendications 1 à 6, **caractérisé en ce que** la barrette de séparation (24) est munie d'un certain nombre d'évidements (28) qui sont espacés les uns des autres par rapport à la direction radiale de l'étoile statorique (8).

8. Système de stator (2) selon l'une des revendications 2 à 7, **caractérisé en ce que** la liaison par encliquetage comporte un évidement (34) formé dans le corps de bobine (4) correspondant et muni de crochets d'encliquetage (36), dans lequel évidement se trouve la barrette de séparation (24).

9. Système de stator (2) selon l'une des revendications 1 à 8, **caractérisé en ce qu**'un élément de retenue (30) est formé sur la barrette de séparation (24), lequel élément est en appui, en direction radiale de l'étoile statorique (8), sur une surface d'appui (34) correspondante du corps de bobine (4).

10. Système de stator (2) selon l'une des revendications 1 à 9, **caractérisé en ce que** la barrette de séparation (24) est articulée sur le corps de bobine (4) à la manière d'une charnière film (38).

11. Moteur électrique, notamment une servocommande d'un système de direction de véhicule automobile, avec un système de stator (2) selon l'une des revendications 1 à 10.
